# EUROPEAN PATENT APPLICATION

(11) **EP 4 789 832 A1**
(43) Date of publication of application: **12.08.2026**
(21) Application number: 25305188.2
(22) Date of filing: 11.02.2025
(51) Int. Cl.: B28C 5/38, B28C 5/02, B28B 19/00, B28C 7/16, B01F 25/313, B01F 23/451, C04B 38/10

(54) **APPARATUS AND METHOD FOR MANUFACTURING CEMENTITIOUS SLURRY COMPRISING FOAM**

(71) Applicant: Saint-Gobain Placo, 92400 Courbevoie (FR)
(72) Inventor: Radomir, KAMLER, 108 03 Prague 10 (CZ); Quentin, MAGDELAINE-GUILLOT DE SUDUIRAU, Courtbevoie 92400 (FR); Guillaume, SAINGIER, 93303 Aubervilliers (FR)
(74) Representative: Murgitroyd & Company

(57) **Abstract**

According to the present invention, there is provided an apparatus (100) for manufacturing a cementitious slurry comprising foam. The apparatus (100) comprises a mixing chamber (130) for mixing a cementitious material and water to form a cementitious slurry, a channel (110) for receiving a cementitious slurry from the mixing chamber (130), the channel (110) fluidly connected to the mixing chamber (130) at a first end, and a foam injector (120), wherein the foam injector (120) extends into the channel (110). A method of manufacturing a cementitious slurry comprising foam using the apparatus (100) is also described.

## Description

### FIELD OF THE INVENTION

The present invention relates to apparatus for manufacturing a cementitious slurry comprising foam. The present invention also relates to a method of manufacturing a cementitious slurry comprising foam using the apparatus.

### BACKGROUND TO THE INVENTION

Cementitious materials are often used in the manufacture of building materials. Calcium sulphate hemihydrate slurries being used in the production of plasterboard is one example of such a process.

Gypsum occurs naturally as a raw material in the form of calcium sulphate dihydrate (CaSO₄ 2(H₂O)). Gypsum containing products, such as plasterboard, are prepared by forming a mixture of calcined or dehydrated gypsum, namely calcium sulphate hemihydrate (CaSO₄ 0.5(H₂O)), with water, to form a settable slurry that is then cast into a pre-determined shape. The calcium sulphate hemihydrate reacts with the water and becomes re-hydrated to the dihydrate crystal, which is then cured or dried to the solid state.

Due their versatility, desirable mechanical properties and the possibility of achieving a high level of finish, gypsum products are commonly found throughout buildings. As such, there is a desire to produce lightweight gypsum products. A reduction in the quantity of gypsum used substantially reduces the resource demand of the manufacturing process, therefore reducing material costs. As such, the weight of these gypsum products is of great importance.

To provide a lightweight gypsum product, foam can be added to the settable slurry. However, the introduction of foam into the slurry can cause shearing and dispersion of the foam. Such dispersion leads to high foam losses, creating an inefficient process that can limit the extent of the density reduction achieved using this method. Foam losses are particularly prevalent when introducing a large amount of foam into the slurry.

Similar issues are seen in the manufacture of construction products from other slurries of cementitious material where foam is incorporated into the slurry.

### SUMMARY OF THE INVENTION

According to a first aspect of the present invention there is provided an apparatus for manufacturing a cementitious slurry comprising foam, the apparatus comprising, a mixing chamber for mixing a cementitious material and water to form a cementitious slurry, a channel for receiving a cementitious slurry from the mixing chamber, the channel fluidly connected to the mixing chamber at a first end, and a foam injector for injecting foam into the cementitious slurry, wherein the foam injector extends into the channel.

The present invention provides an apparatus for efficiently and consistently combining foam with a cementitious slurry, such as a stucco or gypsum slurry. The use of a foam injector that extends into the channel improves the mixing of the foam with the cementitious slurry, increasing the homogeneity of the apparatus' output. More specifically, the use of a foam inlet that extends into the channel helps ensure that any injected foam mixes with the slurry across the entire cross section of the channel, and that any unmixed layers at the boundary of the channel are reduced.

Preferably, the channel has a dimension, and the foam injector extends across at least 10% of the dimension of the channel. In some embodiments, the dimension will be the width of the channel. In other embodiments, the dimension will be the height of the channel. Where the channel comprises a cylindrical portion, the dimension may be the cross-sectional diameter. More preferably, the foam injector extends across at least 25% of the dimension of the channel. Still more preferably, the foam injector extends across at least 50% of the dimension of the channel.

Where the foam injector extends further across the width of the channel, in use, the mixing of the foam and the cementitious slurry within the channel may be further improved. The mixing of the foam and the cementitious slurry may be improved as the unmixed boundary layers at the edge or edges of the channel may be reduced.

In some embodiments, the foam injector terminates 5/8ths of the distance across the dimension of the channel. Here, the centre of the aperture at the end of the foam injector lies at a position 5/8ths of the distance across the dimension of the channel. In some embodiments the dimension of the channel may again be the width of the channel. In other embodiments, the dimension of the channel may again be the height of the channel. 5/8ths may, in the alternative, be described as a position 62.5% across the dimension of the channel.

In some embodiments, the foam injector terminates 23/40ths of the distance across the dimension of the channel. Here, the centre of the aperture at the end of the foam injector lies at a position 23/40ths of the distance across the dimension of the channel. In some embodiments the dimension of the channel may again be the width of the channel. In other embodiments, the dimension of the channel may again be the height of the channel. 23/40ths may, in the alternative, be described as a position 57.5% across the dimension of the channel.

In some embodiments, the foam injector terminates at the halfway point of the dimension of the channel. Here, the centre of the aperture at the end of the foam injector lies at a position 1/2 of the distance across the dimension of the channel. In some embodiments the dimension of the channel may again be the width of the channel. In other embodiments, the dimension of the channel may again be the height of the channel. 1/2 may, in the alternative, be described as a position 50% across the dimension of the channel.

Preferably, the channel comprises a channel longitudinal axis, the foam injector comprises a foam injector longitudinal axis; and the foam injector longitudinal axis and the channel longitudinal axis intersect one another. In such embodiments, the foam injector extends into the channel at the midpoint of a dimension of the channel. In some embodiments, this dimension is the height of the channel. In other embodiments, this dimension is the width of the channel. Where the foam injector extends into the channel at the midpoint of the channel, this additional symmetry within the apparatus may result in improved mixing of the cementitious slurry and the foam within the channel.

Preferably, the foam injector longitudinal axis and the channel longitudinal axis are perpendicular to one another.

Alternatively, an angle between the foam injector longitudinal axis and the channel longitudinal axis is less than 90°. Preferably, this angle is measured between the in use upstream direction of the foam flow and the in use upstream direction of the cementitious slurry flow. In such embodiments, preferably the angle between the foam injector longitudinal axis and the channel longitudinal axis is greater than or equal to 65°. In such embodiments, more preferably the angle between the foam injector longitudinal axis and the channel longitudinal axis is greater than or equal to 75°. Such a configuration may be advantageous in reducing, in use, backpressure on the foam as it flows into the cementitious slurry, increasing the stability of foam within the apparatus during the manufacture of the cementitious product.

Foam stability is evaluated by the Foam Efficiency Factor (FEF), wherein the FEF is calculated using the equation: $FEF = \frac{Volume of air in the manufactured product}{Volume of air in the foam} ∗ 100$

An FEF of 100 is preferable as this indicates the conservation of all foam during manufacture of the cementitious product.

The extent to which the foam and the slurry have been mixed may also be evaluated by considering the deviation in density of the foam and slurry mixture at a given point. For example, measuring the density deviation observed in a mixture of foam and slurry at the outlet of a channel will provide information as to the uniformity of the mixture exiting the channel. Where the measured deviation in density is low, the slurry foam mixture is more homogenous. As such, here is a general desire to minimise the measured density deviation.

In some embodiments, the foam injector comprised a bevelled end. Where the foam injector comprises a bevelled end, the aperture at the end of the foam injector is not perpendicular to the longitudinal axis of the foam injector. Preferably, the bevelled end has a bevel less than or equal to 30°. More preferably, the bevelled end has a bevel equal to 30°. The use of a bevelled end may be preferable, as, in use, it may help reduce the flow of any cementitious slurry into the foam injector during the start-up phase of the apparatus. The angle of the bevelled end may be preferably measured between the longitudinal axis of the channel and the cross section of the aperture at the end of the foam injector.

Preferably, the foam injector has a substantially circular or oval cross section. More preferably, the foam injector is substantially cylindrical. In this way, the surface area to volume ratio of the foam injector is reduced and thus the exposure of the cementitious slurry to the foam injector is reduced. Preferably, the foam injector comprises a diameter of 40 mm or smaller. In some such embodiments, the foam injector comprises a diameter of 20 mm or smaller. In other such embodiments, the foam injector comprises a diameter of 15 mm or smaller. The foam injector may comprise a diameter of 15 mm. The foam injector may comprise a diameter of 20 mm. The stated diameters of the foam injector may be at the aperture from which, in use, the foam is injected into the cementitious slurry. In this way, the apparatus may be advantageous for processes with lower slurry speeds, such as 40 m/min. In alternative such embodiments, the foam injector comprises a diameter in the range of 20 mm to 40 mm. In this way, the apparatus may be advantageous for processes with higher slurry speeds, such as 150 m/min.

In alternative embodiments, the foam injector has a substantially square or rectangular cross section.

Preferably, the channel extends from the first end and terminates at a second end, wherein the second end is connected to a secondary chamber. In this way, the apparatus may comprise an additional chamber which, in use, allows further mixing of the cementitious slurry and foam and/or the addition of further additives.

Alternatively, the channel extends from the first end and terminates at second end, wherein the second end is connected to a distribution hose. In this way, there is provided an apparatus that may, in use, efficiently distribute the mixture of cementitious slurry and foam.

Preferably, the mixing chamber is for mixing a calcium sulphate hemihydrate and water to form a cementitious slurry. In this way, the apparatus may be suitable for the manufacture of plasterboard and related materials.

According to a second aspect of the present invention, there is provided a method of manufacturing a cementitious slurry comprising foam, said method comprising; providing the apparatus hereinbefore described; introducing a cementitious material and water into the mixing chamber to form a cementitious slurry; and introducing foam into the cementitious slurry via the foam injector at a point after the slurry has exited the mixing chamber.

In this way, a method with the advantages of the apparatus previously described is provided.

Preferably, the cementitious material comprises calcium sulphate hemihydrate.

In some embodiments, the foam is a stable foam, the stable foam comprising an alkyl ethyl sulphate soap. In alternative embodiments, the foam is an unstable foam, the unstable foam comprising an alkyl sulphate soap. The present invention has been found to work well when using either stable foams or unstable foams. In this way, the method provides the advantages as previously described when using cementitious slurries comprising stable or unstable foams.

### DETAILED DESCRIPTION

Embodiments of the present invention will now be described by way of example only and with reference to the accompanying drawings, in which:
Figure 1 depicts an apparatus in accordance with the present invention;
Figure 2 depicts a second apparatus in accordance with the present invention;
Figure 3 depicts a third apparatus in accordance with the present invention;
Figure 4a depicts modelling results from a simulation with an apparatus of the prior art;
Figure 4b depicts modelling results from a simulation with a further apparatus according to the present invention;
Figure 4c depicts modelling results from a simulation with a further apparatus according to the present invention; and
Figure 5 depicts a schematic flow diagram of a method according to the present invention.

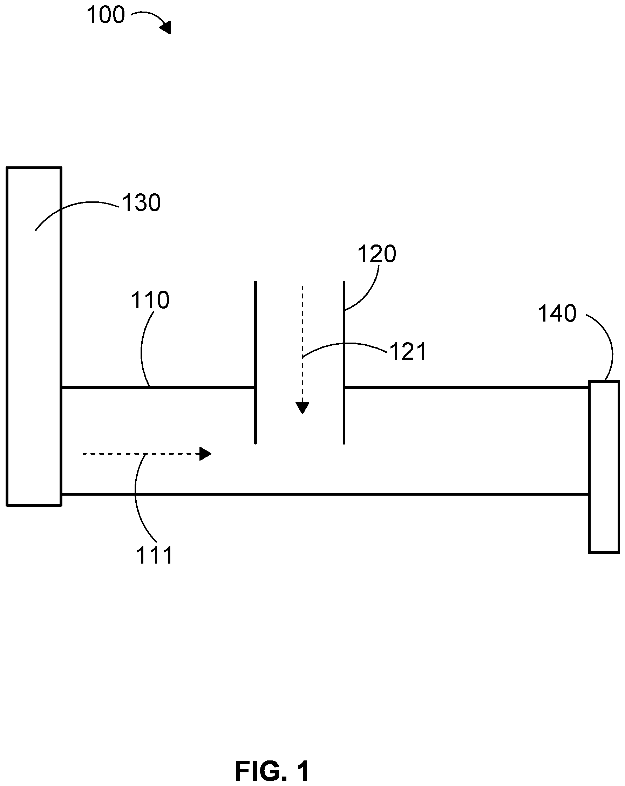

Figure 1 illustrates an apparatus 100 for manufacturing a cementitious slurry comprising foam. The apparatus 100 comprises a channel 110, a foam injector 120, a mixer 130 and a secondary chamber 140. In use, water and a cementitious material is mixed in the mixer 130 to form a cementitious slurry. Subsequently, the cementitious slurry flows from the mixer 130 along the channel 110 in the direction of arrow 111. As the cementitious slurry is flowing through the channel 110, foam flows through the foam injector 120 in the direction of arrow 121. In this way, the foam is mixed with the cementitious slurry in the portion of the channel 110 downstream of the foam injector 120. Ideally the mixing of the foam and the cementitious slurry is such that the mixture exiting the channel 110 is homogenous. At the end of the channel, is a secondary chamber 140. The secondary chamber 140 may allow for further mixing of the cementitious slurry and foam to occur, or for further additives to be introduced into the mixture. In alternative embodiments, the channel 110 may feed directly into a distribution hose.

As can be seen in Figure 1, the foam injector 120 extends into the channel 110. As such, the presence of the foam injector 120 within the channel 110 disrupts the flow of the cementitious slurry within the channel 110, leading to better mixing of the cementitious slurry and the foam and an output mixture with greater homogeneity. As depicted in Figure 1, the foam injector 120 extends halfway, 50%, across a dimension of the channel 110. Here, the dimension of the channel 110 is the width of the channel 110.

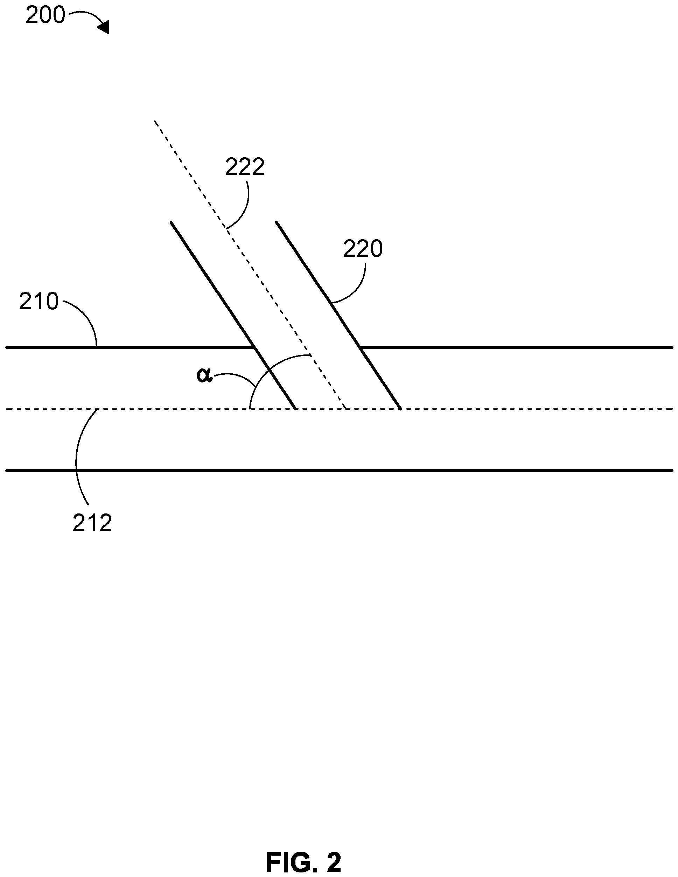

Turning to Figure 2, there is depicted a second apparatus 200 according to the present invention. Again, the apparatus comprises a channel 210 and a foam injector 220, with the mixer omitted for clarity. In this embodiment of the invention the channel 210 could either be a channel between the mixer and a secondary canister, or the channel 210 could be a distribution hose.

In Figure 2, the foam injector 220 again protrudes into the channel 210. The foam injector 220 protrudes into the centre of the channel 210, such that it extends across half, 50%, of a dimension of the channel 210. Here, the dimension of the channel is the width of the channel 210.

In the apparatus 200, the foam injector 220 protrudes into the channel 210 at an angle (α). The angle, α, is measured between the foam injector longitudinal axis 222 and the channel longitudinal axis 212. As shown in Figure 2, the angle α is measured between the in use upstream direction of the foam flow and the in use upstream direction of the cementitious slurry flow. In Figure 2, the angle α is 75°, though alternative values for α are envisaged.

In the apparatus of Figure 2, the protrusion of the foam injector 220 into the channel 210 again disrupts the flow of cementitious slurry within the channel 210, ensuring, in use, improved mixing between the foam injected via the foam injector 220 and the cementitious slurry to produce a mixture with greater homogeneity. The protrusion of the foam injector 220 into the channel 210 at an angle further improves the mixing of the foam and the cementitious slurry within the channel 210.

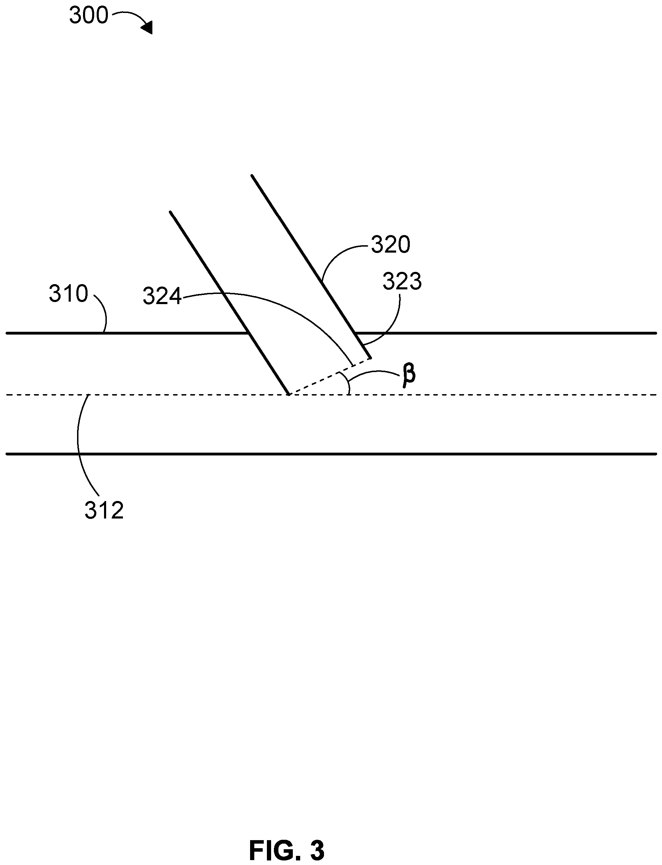

Figure 3 depicts another apparatus 300 according to the present invention. Again, the apparatus 300 comprises a channel 310 and a foam injector 320. Once more, the mixing chamber is omitted for clarity. In this embodiment of the invention the channel 310 could either be a channel between the mixer and a secondary canister, or the channel 310 could be a distribution hose.

In Figure 3, in a similar fashion to the apparatus 100 illustrated in Figure 1, the foam injector 320 protrudes into the channel 310. The foam injector 320 protrudes into the centre of the channel 310, such that it extends across half, 50%, of a dimension of the channel 310. Here, the dimension of the channel is the width of the channel 310. In the apparatus 300, a similar fashion to the apparatus 200 illustrated in Figure 2, the foam injector 320 protrudes into the channel 310 at an angle.

Additionally, in the apparatus 300 of Figure 3, the foam injector 320 has a bevelled end 323. To form the bevelled end 323 of the foam injector 320, one side of the foam injector 320 extends a smaller distance into the channel 310 than the other side. As such, an angle, β, is formed between the longitudinal axis of the channel 312 and the cross section 324 of the opening/aperture at the end of the foam injector 320. Here, angle β is 30°, although alternative angles are envisaged.

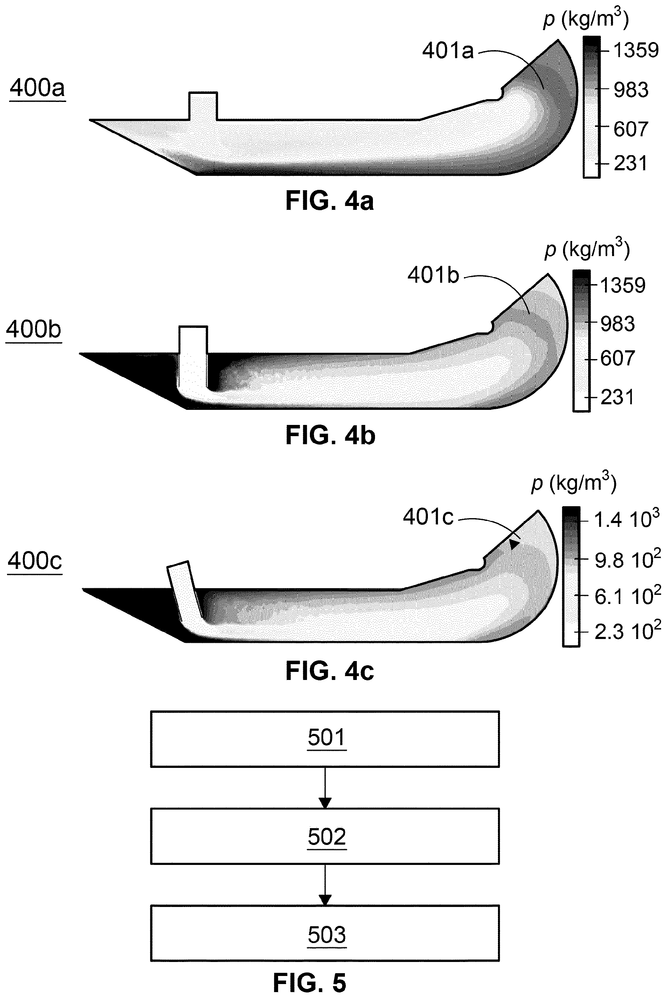

Figure 4a depicts modelling results from a simulation with an apparatus 400a of the prior art, whereas Figures 4b and 4c depict modelling results from simulations with apparatus 400b, 400c according to the present invention. Numerical modelling of slurry-foam blending was caried out using a continuous one-phase model using the ANSYS Fluent computational dynamics software package. In the framework of the model, the foamed cementitious slurry was modelled as an effective incompressible fluid with a non-Newtonian rheology depending on the local air fraction. The cementitious slurry was modelled as an effective fluid with 0% air fraction, whilst the foam was modelled as an effective fluid with 100% air fraction. Herschel-Bulkley rheology was used in the model to describe the foam, the slurry and the foamed slurry, with the coefficients used in the model based upon measurements performed with a lab rheometer. In each of the modelled examples, the channel width was 40 mm, the channel height was 39 mm and the channel had an inner length of 22 cm and an outer length of 29 cm. The flow rate of the non-foamed cementitious slurry was 351 L/min, and the flow rate of the foam was 277 L/min. The density of the slurry was 1548 kg/m³ and the density of air was 1 kg/m³.

In Figures 4a to 4c, lighter areas depict areas of low density within the apparatus 400a, 400b, 400c. These areas typically include a high volume of foam. In Figures 4a to 4c, darker areas depict areas of high density with the apparatus 400a, 400b, 400c. These areas typically include a high volume of cementitious material. Ideally, at the ends of the apparatus 401a, 401b, 401c, the shade across the width of the apparatus is uniform, indicating a high homogeneity within the mixture within the apparatus 401a, 401b, 401c at that point. Visually, it can be seen that the homogeneity of the mixture at the output is improved in the apparatus according to the present invention 400b, 400c, than in the apparatus according to the prior art 400a.

Modelling was carried out for a range of apparatus in the same fashion as described above, with variations made to the position of the foam injector within a dimension of the channel, the diameter of the foam injector outlet, the foam injector angle (α) and the bevel angle (β). For each modelled apparatus the deviation in density of the foam and slurry mixture at the outlet was calculated. For the modelling, the non-foamed slurry was considered to have a yield stress of 200 Pa, a consistency factor of 0.9 Pa·sⁿ and a rheological exponent of 0.79. The foam was considered to have a yield stress of 1.55 Pa, a consistency factor of 1.32 Pa.s" and a rheological exponent of 0.79.

The results of the modelling conducted are presented in Table 1.

**Table 1**

| **Modelling Scenario** | **Foam Injector Position** | **Foam Injector Diameter (mm)** | **Foam Injector Angle (α)** | **Bevel Angle (β)** | **Deviation of Slurry Density at Channel Outlet** |
|---|---|---|---|---|---|
| Comparative Example 1 | Channel edge | 15 | 90° | 0° | 2.1% |
| Example 1 | 1/5 of the way across channel | 15 | 90° | 0° | 1.6% |
| Example 2 | 2/5 of the way across channel | 15 | 90° | 0° | 1.1% |
| Example 3 | ½ of the way across the channel | 15 | 90° | 0° | 0.5% |
| Example 4 | 23/40 of the way across the channel | 15 | 90° | 0° | 0.5% |
| Example 5 | 5/8 of the way across channel | 15 | 90° | 0° | 0.8% |
| Example 6 | 4/5 of the way across channel | 15 | 90° | 0° | 1.4% |
| Example 7 | 5/8 of the way across channel | 15 | 75° | 0° | 0.5% |
| Example 8 | 5/8 of the way across channel | 15 | 65° | 0° | 0.7% |
| Example 9 | 5/8 of the way across channel | 15 | 55° | 0° | 0.9% |
| Example 10 | 5/8 of the way across channel | 15 | 65° | 30° | 1.1% |
| Example 11 | 5/8 of the way across channel | 15 | 65° | 45° | 1.3% |
| Comparative Example 2 | Channel edge | 20 | 90° | 0° | 3.5% |
| Example 12 | 2/5 of the way across channel | 20 | 90° | 0° | 3.1% |
| Example 13 | ½ of the way across the channel | 20 | 90° | 0° | 2.3% |
| Example 14 | 23/40 of the way across the channel | 20 | 90° | 0° | 1.0% |
| Example 15 | 5/8 of the way across channel | 20 | 90° | 0° | 0.4% |
| Example 16 | 5/8 of the way across channel | 20 | 75° | 0° | 1.9% |
| Example 17 | 5/8 of the way across channel | 20 | 65° | 0° | 2.6% |

As can be seen from Table 1, positioning the foam injector within the volume of the channel reduces the observed deviation in the density of the foam and slurry mixture at the channel outlet. Each of Examples 1 to 6 demonstrates an improvement (reduction) in the density deviation at the channel outlet in comparison to Comparative Example 1. The lowest observed density deviation and, therefore, the best performance, is observed when the foam injector is located 23/40 of the way across the channel.

Comparing Examples 7 and 8 to Example 5 illustrates that introducing a foam injector angle (α) may further reduce the deviation in density observed at the outlet. Example 7 exhibits the best performance, with a measured density deviation at the outlet of only 0.5%. Where the foam injector angle (α) is 55°, as in Example 9, performance does regress in comparison to the Examples 7, 8 and 5. However, the performance of Example 9 remains superior that measured for Comparative Example 1.

Examples 10 and 11 both also show improved performance when considered in relation to Comparative Example 1. However, the introduction of a bevel angle (β) does result in a regression of performance in comparison to Example 8. As such, while the use of a bevel angle as modelled here reduces performance in the steady state, it improves performance of the apparatus during start up. As such, an apparatus with the features of Example 10 or Example 11 may still be preferred. The performance of all Examples 1 to 11 is superior to that of Comparative Example 1.

Comparative Example 1 and Examples 1 to 11 are based on modelling where the foam injector has a diameter of 15 mm. Comparative Example 2 and Examples 12 to 13 are based on modelling where the foam injector has a diameter of 20 mm. When reviewing Examples 12, 13, 14 and 15 and considering Comparative Example 2, it can again be seen that where the foam injector extends across the channel the variation in density at the end of the channel is reduced. Additionally, the greatest improvement is seen in Example 15, where the foam injector extends across 5/8 of the channel. Unlike the examples using a 15 mm foam injector, the introduction of a foam injector angle (α) does produce a regression in performance at all measured angles. This effect can be seen from a comparison of Examples 16 and 17 to Example 15. However, where a foam injector angle (α)is introduced in Examples 16 and 17, the performance of the apparatus as modelled in the examples is again better than that seen in Comparative Example 2.

Figure 5 depicts a method of manufacturing a cementitious slurry comprising foam according to the present invention.

In a first step of the method 501, an apparatus is provided, the apparatus including a mixing chamber for mixing a cementitious material and water to form a cementitious slurry and a channel for receiving a cementitious slurry from the mixing chamber, where the channel is fluidly connected to the mixer at a first end. Additionally, the apparatus includes a foam injector for injecting foam into the cementitious slurry, with the foam injector extending into the channel.

In a second step of the method 502, a cementitious material is introduced into the mixing chamber alongside water. The cementitious material is mixed with the water to form a cementitious slurry. Frequently, the cementitious slurry is a calcium sulphate hemihydrate slurry. The amount of water and cementitious material may be varied to alter the fluidity of the cementitious slurry. Due to the configuration of the apparatus, the cementitious slurry flows out of the mixing chamber into and along the channel.

In a third step of the method 503, foam is introduced into the cementitious slurry via the foam injector. As such, in the channel downstream of the foam injector, the foam mixes with the cementitious slurry to form a homogeneous mixture of foam and cementitious material. This mixture is suitable for further processing and the manufacture of cementitious products. For example, where the cementitious material calcium sulphate hemihydrate, the output mixture may be used in the manufacture of plasterboards.

## Claims

1. Apparatus for manufacturing a cementitious slurry comprising foam, the apparatus comprising;
a mixing chamber for mixing a cementitious material and water to form a cementitious slurry,
a channel for receiving a cementitious slurry from the mixing chamber, the channel fluidly connected to the mixing chamber at a first end, and
a foam injector for injecting foam into the cementitious slurry,
wherein the foam injector extends into the channel.

2. The apparatus of claim 1, wherein the channel has a dimension, and the foam injector extends across at least 10% of the dimension of the channel.

3. The apparatus of claim 2, wherein the foam injector extends across at least 25% of the dimension of the channel, more preferably across at least 50% of the dimension of the channel.

4. The apparatus of any one preceding claim, wherein the foam injector terminates 5/8ths of the distance across the dimension of the channel.

5. The apparatus of any one preceding claim, wherein
the channel comprises a channel longitudinal axis;
the foam injector comprises a foam injector longitudinal axis; and
the foam injector longitudinal axis and the channel longitudinal axis intersect one another.

6. The apparatus of claim 5, wherein the foam injector longitudinal axis and the channel longitudinal axis are perpendicular to one another

7. The apparatus of claim 5, wherein an angle between the foam injector longitudinal axis and the channel longitudinal axis is less than 90°.

8. The apparatus of claim 7, wherein an angle between the foam injector longitudinal axis and the channel longitudinal axis is greater than or equal to 65°, more preferably greater than or equal to 75°.

9. The apparatus of any one preceding claim, wherein the foam injector comprised a bevelled end.

10. The apparatus of claim 9, wherein the bevelled end has a bevel less than or equal to 30°.

11. The apparatus of any one preceding claim, wherein the foam injector comprises a diameter of 40 mm or smaller.

12. The apparatus of any one of claims 1 to 11, wherein the channel extends from the first end and terminates at a second end, wherein the second end is connected to a secondary chamber.

13. The apparatus of any one of claims 1 to 11, wherein the channel extends from the first end and terminates at second end, wherein the second end is connected to a distribution hose.

14. A method of manufacturing a cementitious slurry comprising foam, said method comprising;
providing the apparatus of any one preceding claim;
introducing a cementitious material and water into the mixing chamber to form a cementitious slurry; and
introducing foam into the cementitious slurry via the foam injector.

15. The method of claim 14, wherein the cementitious material comprises calcium sulphate hemihydrate.
